# EUROPEAN PATENT APPLICATION

(11) **EP 3 943 291 A1**
(43) Date of publication of application: **26.01.2022**
(21) Application number: 20774242.0
(22) Date of filing: 19.03.2020
(51) Int. Cl.: B32B 27/00, B32B 27/18, C03C 27/12, G03H 1/02, B32B 7/023

(54) **INTERMEDIATE FILM FOR LAMINATED GLASS, AND LAMINATED GLASS**

(30) Priority: 20.03.2019 JP 2019053896
(71) Applicant: SEKISUI CHEMICAL CO., LTD., Osaka-shi Osaka 530-8565 (JP)
(72) Inventor: NOHARA, Atsushi, Koka-shi, Shiga 528-8585 (JP); IZU, Yasuyuki, 6045JB Roermond (NL); FUJIOKA, Sho, Koka-shi, Shiga 528-8585 (JP); OOTA, Yuusuke, Koka-shi, Shiga 528-8585 (JP); MASUYAMA, Yoshikazu, Koka-shi, Shiga 528-8585 (JP)
(74) Representative: Ter Meer Steinmeister & Partner
(86) International application number: PCT/JP2020/012500
(87) International publication number: WO 2020/189780

(57) **Abstract**

An interlayer film (10) for laminated glass comprises an optical function layer (15) and a first thermoplastic resin layer (11) provided on one surface (15A) side of the optical function layer (15). The optical function layer (15) comprises a matrix polymer, a polymer of a photoreactive monomer, and a photopolymerization initiator. The first thermoplastic resin layer (11) comprises an ultraviolet ray absorber and has a transmittance at a wavelength of 400 nm of 20% or less.

## Description

### Technical Field

The present invention relates to an interlayer film for laminated glass, comprising an optical function layer, and a laminated glass comprising the interlayer film for laminated glass.

### Background Art

In the past, a laminated glass obtained by interposing an interlayer film between two glass plates and integrating the interlayer film and the glass plates has widely been known. The interlayer film is formed in many cases with plasticized polyvinyl acetal containing a plasticizer blended in a polyvinyl acetal resin. The laminated glass has widely been used as window glass of vehicles, such as an automobile, airplanes, buildings, and the like because of its safety in that when the laminated glass is broken by receiving external impact, pieces of broken glass hardly scatter.

To a windshield of an automobile, an airplane, or the like, a head-up display (HUD) that displays information necessary for driving, or the like in the same visual field as the windshield is applied in some cases. HUD which allows a driver to visually recognize light from a projector provided in an instrument panel or the like by reflecting the light at a windshield comprising a laminated glass has widely been known.

Utilizing a hologram as HUD which is applied to a windshield of an automobile, or the like has been studied. For example, PTL1 discloses disposing a relief hologram between two glass plates which forms a laminated glass. PTL2 discloses a hologram-sealed laminated glass having a structure in which a glass plate, a hologram, a hologram-covering layer, and a synthetic resin film are laminated in the mentioned order.

In PTL1, an ultraviolet ray absorption layer is provided between the two glass plates in order to prevent deterioration of the relief hologram due to ultraviolet rays, and the relief hologram is disposed on the inner side of the car with respect to the ultraviolet ray absorption layer. Also, in PTL2, the synthetic resin film has ultraviolet ray absorption ability, and direct irradiation of the hologram with ultraviolet light from the outside of the car is prevented.

### Citation List

### Patent Literature

PTL1: JP 2013-127489 A
PTL2: JP 5-85784 A

### Summary of Invention

### Technical Problem

As the hologram, a volume hologram is known in addition to the above-described relief hologram. The volume hologram is formed from a composition comprising, for example, a matrix polymer, a photoreactive monomer, a photopolymerization initiator, and a photosensitizer, and when the volume hologram is subjected to exposure with an interference light wave, the photoreactive monomer is polymerized, and an image is thereby recorded. When the volume hologram is irradiated with reproduction light, the recorded image is reproduced.

However, in a laminated glass comprising a volume hologram, a trouble that the laminated glass is deteriorated by being irradiated with sunlight for a long period of time occurs even when a general ultraviolet ray absorption layer is provided as in PTLs 1 and 2.

Accordingly, an object of the present invention is to provide an interlayer film for laminated glass, having a particular optical function layer, the interlayer film having light resistance such that the optical function layer is not deteriorated by light even when the interlayer film is irradiated with sunlight or the like for a long period of time.

### Solution to Problem

The present inventors have conducted diligent studies to find that by providing a first thermoplastic resin layer comprising an ultraviolet ray absorber and having a transmittance at a wavelength of 400 nm of a certain value or less in an interlayer film for laminated glass comprising a particular optical function layer that constitutes a volume hologram, the above problem can be solved, and thereby completed the present invention below.
[1] An interlayer film for laminated glass, comprising:
   an optical function layer; and
   a first thermoplastic resin layer provided on one surface side of the optical function layer, wherein
   the optical function layer comprises a polymer of a photoreactive monomer, and a matrix polymer, and
   the first thermoplastic resin layer comprises an ultraviolet ray absorber, and has a transmittance at a wavelength of 400 nm of 20% or less.
[2] The interlayer film for laminated glass according to [1], wherein the first thermoplastic resin layer has a transmittance at a wavelength of 410 nm of 60% or less.
[3] The interlayer film for laminated glass according to [1] or [2], wherein the first thermoplastic resin layer has a transmittance at a wavelength of 420 nm of 70% or less.
[4] The interlayer film for laminated glass according to any one of [1] to [3], wherein the ultraviolet ray absorber is at least one selected from the group consisting of a benzotriazole compound, an indole-based compound, and a porphyrin compound.
[5] The interlayer film for laminated glass according to [4], wherein the ultraviolet ray absorber comprises a benzotriazole compound and at least one selected from the group consisting of an indole-based compound and a porphyrin compound.
[6] The interlayer film for laminated glass according to any one of [1] to [5], further comprising a second thermoplastic resin layer provided on another surface side of the optical function layer.
[7] The interlayer film for laminated glass according to [6], wherein when a transmittance of the second thermoplastic resin layer at a wavelength of 400 nm is assumed to be T400(2), and a transmittance of the first thermoplastic resin layer at a wavelength of 400 nm is assumed to be T400(1), the interlayer film for laminated glass satisfies a relationship of T400(2)>T400(1).
[8] The interlayer film for laminated glass according to [6] or [7], wherein when a transmittance of the second thermoplastic resin layer at a wavelength of 410 nm is assumed to be T410(2), and a transmittance of the first thermoplastic resin layer at a wavelength of 410 nm is assumed to be T410(1), the interlayer film for laminated glass satisfies a relationship of T410(2)>T410(1).
[9] The interlayer film for laminated glass according to any one of [6] to [8], wherein when a transmittance of the second thermoplastic resin layer at a wavelength of 420 nm is assumed to be T420(2), and a transmittance of the first thermoplastic resin layer at a wavelength of 420 nm is assumed to be T420(1), the interlayer film for laminated glass satisfies a relationship of T420(2)>T420(1).
[10] The interlayer film for laminated glass according to any one of [1] to [9], wherein the optical function layer comprises a photopolymerization initiator.
[11] A laminated glass comprising:
   the interlayer film for laminated glass according to any one of [1] to [10]; and
   a pair of glass plates, wherein
   the interlayer film for laminated glass is disposed between the pair of glass plates.

### Advantageous Effects of Invention

An interlayer film for laminated glass of the present invention has a particular optical function layer, but has good light resistance such that it is not deteriorated by light even when irradiated with sunlight or the like for a long period of time.

### Brief Description of Drawings

[Fig. 1] Fig. 1 is a section view showing a laminated glass of the first embodiment of the present invention.
[Fig. 2] Fig. 2 is a section view showing a laminated glass of the second embodiment of the present invention.
[Fig. 3] Fig. 3 is a section view showing a laminated glass of a modified example of the second embodiment of the present invention.

### Description of Embodiments

Hereinafter, an interlayer film for laminated glass of the present invention will be described in detail with reference to embodiments.

The interlayer film for laminated glass of the present invention comprises an optical function layer, and a first thermoplastic resin layer provided on one surface side of the optical function layer. In addition, the interlayer film for laminated glass of the present invention preferably further comprises a second thermoplastic resin layer provided on another surface side of the optical function layer.

When the interlayer film for laminated glass is used, for example, for window glass of outdoor window, the first thermoplastic resin layer is disposed on the outdoor side with respect to the optical function layer, as will be mentioned later. The second thermoplastic resin layer is disposed on the indoor side with respect to the optical function layer.

Hereinafter, respective members that constitute the interlayer film for laminated glass of the present invention will be described in more detail.

### [Optical Function Layer]

The optical function layer which is used in the present invention comprises a polymer of a photoreactive monomer, and a matrix polymer. The optical function layer, when comprising these components, constitutes a volume hologram. That is, when the optical function layer is subjected to exposure with interference light to polymerize the photoreactive monomer, image information can thereby be recorded. More specifically, contrast of the interference light produces a sparse and dense state of the photoreactive monomer and the polymer of the photoreactive monomer, and a hologram is formed by the difference in refractive index between the sparse and dense states of the photoreactive monomer and the polymer of the photoreactive monomer, and the matrix polymer, so that the image information can be recorded. The optical function layer where the image information has been recorded can reproduce the recorded image by being irradiated with reproduction light. Accordingly, the photoreactive monomer in addition to the polymer of the photoreactive monomer generally exists in the optical function layer.

### (Photoreactive Monomer)

The photoreactive monomer has at least one ethylenically unsaturated double bond and is polymerizable by being subjected to exposure with interference light. The photoreactive monomer preferably has a relatively high refractive index. As the photoreactive monomer, an acrylic-based monomer is preferably used. The acrylic-based monomer is a monomer having any one of an acryloyl group or a methacryloyl group.

Examples of the acrylic-based monomer include 2,3-dibromopropyl acrylate, dicyclopentanyl acrylate, dibromoneopentyl glycol diacrylate, 2-phenoxyethyl acrylate, 2-phenoxymethyl methacrylate, phenol ethoxylate monoacrylate, 2-(p-chlorophenoxy)ethyl acrylate, p-chlorophenyl acrylate, phenyl acrylate, phenyl methacrylate, 2-phenylethyl acrylate, 2-(1-naphthyloxy)ethyl acrylate, o-biphenyl methacrylate, o-biphenyl acrylate, benzyl acrylate, phenyl acrylate, 2-phenylethyl acrylate, 2-phenoxyethyl methacrylate, phenol ethoxylate acrylate, methylphenoxyethyl acrylate, phenoxyethoxyethyl acrylate, phenoxyethoxyethyl methacrylate, nonylphenoxyethyl acrylate, 2-hydroxy-3-phenoxypropyl acrylate, phenoxy polyethylene glycol acrylate, 1,4-benzenediol dimethacrylate, 1,4-diisopropenylbenzene, 1,3,5-triisopropenylbenzene, benzoquinone monomethacrylate, 2-(1-naphthyloxy)ethyl acrylate, 2,3-naphthalene dicarboxylic acid (acryloxyethyl) monoester, an ether compound of diphenolic acid and 3-methacryloyloxy-2-hydroxypropanol, β-acryloxyethyl hydrogen phthalate, 2,2-di(p-hydroxyphenyl)propane diacrylate, 2,3-di(p-hydroxyphenyl)propane dimethacrylate, 2,2-di(p-hydroxyphenyl)propane dimethacrylate, polyoxyethyl-2,2-di(p-hydroxyphenyl)propane dimethacrylate, an ether compound of bisphenol A and 3-methacryloyloxy-2-hydroxyethanol, ethoxylated bisphenol A diacrylate, an ether compound of bisphenol A and 3-acryloyloxy-2-hydroxypropanol, an ether compound of bisphenol A and 2-acryloxyethanol, 2,2-bis(4-acryloxyethoxyphenyl)propane, 2,2-bis(4-methacryloxyethoxyphenyl)propane, 2,2-bis(4-acryloxydiethoxyphenyl)propane, 2,2-bis(4-methacryloxydiethoxyphenyl)propane, bis(4-acryloxydiethoxyphenyl)methane, bis(4-methacryloxydiethoxyphenyl)methane, 2-(p-chlorophenoxy)ethyl acrylate, an ether compound of tetrachlorobisphenol A and 3-acryloyloxy-2-hydroxypropanol, an ether compound of tetrachlorobisphenol A and 2-methacryloyloxyethanol, an ether compound of tetrabromobisphenol A and 3-methacryloyloxy-2-hydroxypropanol, an ether compound of tetrabromobisphenol A and 2-methacryloyloxyethanol, bis(4-acryloxyethoxy-3,5-dibromophenyl)methane, bis(4-methacryloxyethoxy-3,5-dibromophenyl)methane, 2,2-bis(4-acryloxyethoxy-3,5-dibromophenyl)propane, 2,2-bis(4-methacryloxyethoxy-3,5-dibromophenyl)propane, bis(4-acryloxyethoxyphenyl)sulfone, bis(4-methacryloxyethoxyphenyl)sulfone, bis(4-acryloxydiethoxyphenyl)sulfone, bis(4-methacryloxydiethoxyphenyl)sulfone, bis(4-acryloxypropoxyphenyl)sulfone, bis(4-methacryloxypropoxyphenyl)sulfone, phenylthioethyl acrylate, phenylthioethyl methacrylate, diethylene dithioglycol diacrylate, diethylene dithioglycol dimethacrylate, triphenylmethylthio acrylate, 2-(tricyclo[5,2,102,6]dibromodecylthio)ethyl acrylate, S-(1-naphthylmethyl)thio acrylate, 2-(9-carbazolyl)ethyl acrylate, 2-[β-(N-carbazil)propionyloxy]ethyl acrylate, 2-naphthyl acrylate, 2-naphthyl methacrylate, pentachlorophenyl acrylate, 2,4,6-tribromophenyl acrylate, 2-(2-naphthyloxy)ethyl acrylate, N-p-biphenyl methacrylate, 1,4-bis(2-thionaphthyl)-2-butyl acrylate, 1,4-bis(2-thionaphthyl)-2-butyl methacrylate, bisphenol A diacrylate, bisphenol A dimethacrylate, 2,3-naphthalene dicarboxylic acid (2-acryloxyethyl)(3-acryloxypropyl-2-hydroxy) diester, N-phenylmethacrylamide, t-butylphenyl methacrylate, diphenic acid (2-methacryloxyethyl) monoester, diphenic acid (2-acryloxyethyl)(3-acryloxypropyl-2-hydroxy) diester, and 4,5-phenanthlene dicarboxylic acid (2-acryloxyethyl)(3-acryloxypropyl-2-hydroxy) diester.

In addition, the acrylic-based monomer may be an acrylic-based monomer having a 9,9-diaryl fluorene skeleton and having at least one (meth)acryloyl group in a molecule, a urethane acrylate, or the like. Examples of the urethane acrylate include a urethane acrylate comprising a condensate of a phenyl isocyanate compound and a compound having a hydroxy group and a (meth)acryloyl group in one molecule.

Further, the photoreactive monomer may be a photoreactive monomer other than the acrylic-based monomer, such as styrene, methoxystyrene, 2-chlorostyrene, 2-bromostyrene, N-vinylcarbazole, phenylmaleimide, and 2-vinylnaphthalene.

The photoreactive monomer can be used singly, or two or more photoreactive monomers can be used in combination. The content of the photoreactive monomer in the optical function layer is preferably in a range of, for example, 10 to 50% by mass.

### (Matrix Polymer)

Examples of the matrix polymer include polyvinyl acetate (polyvinyl acetate), polyvinyl butyrate, polyvinyl formal, polyvinyl carbazole, polyacrylic acid, polymethacrylic acid, polymethyl acrylate, polymethyl methacrylate, polyethyl acrylate, polybutyl acrylate, polymethacrylonitrile, polyethyl methacrylate, polybutyl methacrylate, polyacrylonitrile, poly-1,2-dichloroethylene, an ethylene-vinyl acetate copolymer, a tetrafluoroethylene-vinyl acetate copolymer, syndiotactic polymethyl methacrylate, poly-α-vinyl naphthalate, polycarbonate, cellulose acetate, cellulose triacetate, cellulose acetate butyrate, polystyrene, poly-α-methylstyrene, poly-o-methylstyrene, poly-p-methylstyrene, poly-p-phenylstyrene, poly-2,5-dichlorostyrene, poly-p-chlorostyrene, a polyarylate, a polysulfone, a polyether sulfone, a styreneacrylonitrile copolymer, a styrene-divinylbenzene copolymer, a styrene-butadiene copolymer, a styrene-maleic anhydride copolymer, an ABS resin, polyethylene, polyvinyl chloride, polypropylene, polyethylene terephthalate, polybutylene terephthalate, polyethylene naphthalate, polyvinylpyrrolidone, polyvinylidene chloride, a hydrogenated styrene-butadiene-styrene copolymer, a polyurethane, polytetrafluoroethylene, and polyvinylidene fluoride. In addition, the matrix polymer may be a copolymer of tetrafluoroethylene, hexafluoroethylene, or the like, and a vinyl alcohol, a vinyl ester, vinyl ether, vinyl acetal, vinyl butyral, or the like, or may be a copolymer of a (meth)acrylic acid alicyclic ester and methyl (meth)acrylate, a methyl methacrylate-ethyl acrylate-acrylic acid copolymer, or the like. Among these, a polyurethane is preferable.

The content of the matrix polymer in the optical function layer is within a range of, for example, 30 to 80% by mass.

### (Photopolymerization Initiator)

The optical function layer preferably comprises a photopolymerization initiator. As the photopolymerization initiator, a known photopolymerization initiator can be used, and examples thereof include an iodonium salt, a triazine-based compound, an azo compound, an azide compound, an organic peroxide, an organic borate salt, an onium salt, a halogenated hydrocarbon derivative, a titanocene compound, an acylphosphine oxide, and a combination of a bis-acylphosphine oxide and an α-hydroxy ketone. In addition, a radical polymerization initiator system using a hydrogen donor, such as a thiol compound, and a bis-imidazole derivative together can also be utilized.

As the photopolymerization initiator, a single molecular type may be used, or a bimolecular type may be used. The single molecular type initiates polymerization by the photopolymerization initiator alone, and a bond in the single molecule is cleaved by, for example, irradiation with interference light to generate a free radical. In the case of the bimolecular type, the optical function layer further comprises coloring matter, such as a dye. The bimolecular type initiates polymerization by the polymerization initiator and the coloring matter. In the case of the bimolecular type, the coloring matter, such as, for example, a dye, absorbs photons to transfer energy from the excited state to the photopolymerization initiator (co-initiator), and the photopolymerization initiator releases a polymerization-inducing free radical by electron or proton transfer, or direct hydrogen abstraction. As the co-initiator, for example, an alkyl aryl ammonium borate or the like is used.

The content of the photopolymerization initiator in the optical function layer is preferably within a range of, for example, 0.1 to 5% by mass.

The coloring matter contained in the optical function layer is not particularly limited, and a known dye and the like can be used. Examples thereof include cyanine-based, polymethine-based, phenazine-based, phenoxazine-based, phenothiazine-based, diarylmethane-based, triarylmethane-based, (thio)pyrylium salt-based, squarylium-based, coumarin-based, xanthene-based, thioxanthene-based, acene-based, merocyanine-based, thiazolium-based, acridine-based, hemicyanine-based, zeromethine-based and streptocyanine-based dyes. These dyes may be used singly, two or more dyes may be used in combination, or, for example, three or more dyes may be used to match RGB.

In the optical function layer, a known additive, such as a chain transfer agent, which is used for a volume hologram may appropriately be blended in addition to those described above.

The thickness of the optical function layer is not particularly limited, but is, for example, 0.1 to 50 µm, and preferably 1 to 10 µm.

The optical function layer may be formed on, for example, a base material. Examples of the base material on which the optical function layer is formed include a resin film. As the resin film, a film of polycarbonate (PC), polyethylene terephthalate (PET), polybutylene terephthalate, polyethylene, polypropylene, cellulose acetate, cellulose hydrate, nitrocellulose, a cycloolefin polymer, polystyrene, polyepoxide, polysulfone, cellulose triacetate (TAC), a polyamide, polymethyl methacrylate, polyvinyl chloride, polyvinyl butyral, polydicyclopentadiene, a mixture thereof, or the like can be used. These may be a single-layered film, or may be a multi-layered film. The multi-layered film is obtained by laminating a plurality of layers each comprising a different material into a multi-layer. Among these, a TAC film is preferable.

The thickness of the base material on which the optical function layer is formed is, for example, 10 to 200 µm, and preferably 40 to 100 µm.

Further, a cover material may be laminated on the optical function layer formed on the base material, and both surfaces of the optical function layer may be covered with the base material and the cover material, respectively. This makes it easy to protect the optical function layer.

However, the optical function layer is not necessarily formed on the base material, and, for example, may be laminated directly on the first thermoplastic resin layer or the second thermoplastic resin layer. The optical function layer may be laminated directly on the glass plate that forms laminated glass, which will be mentioned later.

### (Preparation of Optical Function Layer)

In preparation of the optical function layer, a composition for the optical function layer, comprising a photoreactive monomer, a matrix polymer, and other additives, such as a photopolymerization initiator, coloring matter, and a chain transfer agent, which are blended as necessary, is first prepared. The composition for the optical function layer may appropriately be diluted with a solvent. The optical function layer may be formed by coating the base material, a release sheet, or the like with the composition for the optical function layer, and if necessary, drying the composition for the optical function layer.

When the matrix polymer is a thermosetting resin, such as a polyurethane, a composition for the optical function layer, comprising precursor components (for example, as for a polyurethane, a polyol and a polyisocyanate) of the matrix polymer, a photoreactive monomer, and other additives, such as a photopolymerization initiator, coloring matter, and a chain transfer agent, which are optionally blended as necessary, may be prepared. In that case, the precursor components may be cured after coating the base material, release sheet, or the like with the composition for the optical function layer. Also in this case, the applied composition for the optical function layer may appropriately be dried as necessary.

The optical function layer is subjected to exposure to react the photoreactive monomer, thereby making at least part of the photoreactive monomer into a polymer. On that occasion, a hologram is formed by interfering two types of light waves.

The optical function layer such that the hologram is formed on the release sheet may be peeled from the release sheet and laminated on the first thermoplastic resin layer, the second thermoplastic resin layer, the glass plate, or the like.

The optical function layer may be formed by directly coating the glass plate that forms a laminated glass in place of the base material or the release sheet with the composition for the optical function layer.

### [First Thermoplastic Resin Layer]

The first thermoplastic resin layer comprises an ultraviolet ray absorber and has a transmittance at a wavelength of 400 nm of 20% or less. In the present invention, when the interlayer film for laminated glass comprises such a first thermoplastic resin layer, deterioration of the optical function layer by light can be prevented even when the interlayer film for laminate glass is irradiated with sunlight or the like for a long period of time, and the light resistance can be improved.

The principle is uncertain, but unexpectedly enough, the above-described optical function layer is easily deteriorated by light around 400 nm, and on the other hand, the absorptivity of a usual ultraviolet ray absorption layer at around 400 nm is not so low. Therefore, it is inferred that in the present invention, the light resistance is improved, as compared to the case where a conventional ultraviolet ray absorption layer is used, by controlling the transmittance at a wavelength of 400 nm in such a way as to be low.

When the first thermoplastic resin layer has a transmittance at a wavelength of 400 nm of larger than 20%, the optical function layer is deteriorated by light due to irradiation with sunlight or the like for a long period of time, so that the optical function layer does not function well over a long period. From the viewpoint of preventing the deterioration of the optical function layer by light, the transmittance at a wavelength of 400 nm is preferably 16% or less, more preferably 10% or less, still more preferably 5% or less, and further still more preferably 3.5% or less. The transmittance at a wavelength of 400 nm may be 0% or more, but practically, the transmittance is preferably 0.1% or more, and still more preferably 0.2% or more.

The first thermoplastic resin layer preferably has a transmittance at a wavelength of 410 nm of 60% or less. The optical function layer is easily deteriorated by light due to not only light around 400 nm but also light around 410 nm, but the deterioration of the optical function layer by light can more effectively be prevented by lowering the transmittance at a wavelength of 410 nm.

In addition, the first thermoplastic resin layer preferably has a transmittance at a wavelength of 420 nm of 70% or less. The optical function layer is also deteriorated by light due to light around 420 nm in some cases, but by setting the transmittance at 420 nm to 70% or less, the deterioration of the optical function layer by light can effectively be prevented.

Further, the first thermoplastic resin layer more preferably has a transmittance at a wavelength of 410 nm of 60% or less and a transmittance at a wavelength of 420 nm of 70% or less. When each of the transmittances at a wavelength of 410 nm and a wavelength of 420 nm is equal to or less than a certain value, thereby the deterioration of the optical function layer by light can further effectively be prevented.

The first thermoplastic resin layer more preferably has a transmittance at 410 nm of 45% or less, still more preferably 25% or less, and further still more preferably 20% or less. Setting the transmittance at 410 nm to the upper limit value of these or less makes it further easier to prevent the deterioration of the optical function layer by light.

The transmittance of the first thermoplastic resin layer at 410 nm is not particularly limited, but is, for example, 1% or more, preferably 5% or more, more preferably 10% or more, and still more preferably 15% or more. By setting the transmittance at 410 nm to the lower limit value of these or more, lowering of the visible light transmittance and occurrence of coloration of the interlayer film for laminated glass are prevented.

The first thermoplastic resin layer more preferably has a transmittance at a wavelength of 420 nm of 60% or less. Setting the transmittance at 420 nm to 60% or less makes it further easier to prevent the deterioration of the optical function layer by light.

The transmittance of the first thermoplastic resin layer at 420 nm is not particularly limited, but is, for example, 1% or more, preferably 7% or more, and more preferably 15% or more. By setting the transmittance at 420 nm to the lower limit value of these or more, lowering of the visible light transmittance and occurrence of coloration of the interlayer film for laminated glass are prevented.

### (Ultraviolet Ray Absorber)

The first thermoplastic resin layer comprises an ultraviolet ray absorber. When the first thermoplastic resin layer comprises an ultraviolet ray absorber, deterioration of the optical function layer and the first thermoplastic resin layer by light due to sunlight or the like can thereby be prevented. In addition, when a laminated glass comprising the interlayer film for laminated glass is used as, for example, window glass, transmission of ultraviolet rays into the indoor side through the window glass can be prevented.

Examples of the ultraviolet ray absorber include a benzotriazole compound, an indole-based compound, and a porphyrin compound. These may be used singly, or two or more of these may be used together. In the present invention, by adjusting the type and blending amount of the ultraviolet ray absorber which is used, the transmittances at 400 to 420 nm can be adjusted within predetermined ranges, as described above.

### <Benzotriazole Compound>

The benzotriazole compound which is used as the ultraviolet ray absorber is a compound having a benzotriazole skeleton and being capable of absorbing ultraviolet rays. Examples of the benzotriazole compound include a compound having a maximum absorption wavelength peak in a wavelength region of 300 to 390 nm, preferably 330 to 375 nm, and more preferably 345 to 360 nm.

In the present specification, the maximum absorption wavelength of the ultraviolet ray absorber can be measured by the following method. A chloroform solution is obtained by mixing 0.0002 to 0.002 parts by mass of the compound to be measured based on 100 parts by mass of chloroform. The obtained chloroform solution is put in a quartz cell for a spectrophotometer, having an optical path length of 1.0 cm. The transmittance from 300 to 2500 nm is measured using an automatic recording spectrophotometer ("U4100" manufactured by Hitachi, Ltd.) to determine a maximal absorption wavelength. A maximal absorption wavelength refers to a wavelength where the transmittance shows a minimum value, and a plurality of such wavelengths exist in some cases, and in those cases, the maximum absorption wavelength refers to a wavelength where the minimum value is the smallest.

Preferred specific examples of the benzotriazole compound is a compound represented by the following formula (1). 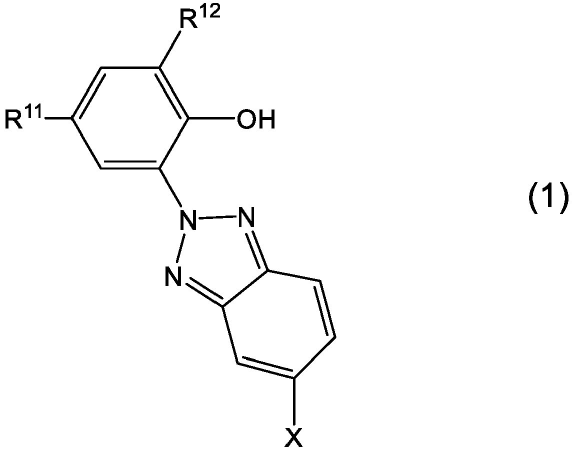 wherein R¹¹ represents a hydrogen atom, a Cl-8 alkyl group, or a C4-20 alkoxycarbonylalkyl group, R¹² represents a hydrogen atom or a C1-8 alkyl group, and X represents a chlorine atom or a hydrogen atom.

In formula (1), the alkyl groups of R¹¹ and R¹² may each be an alkyl group having a linear structure, or an alkyl group having a branched structure. The alkoxycarbonylalkyl group may be an alkoxycarbonylalkyl group having a linear structure, or an alkoxycarbonylalkyl group having a branched structure. Examples of R¹¹ and R¹² include a hydrogen atom, a methyl group, an ethyl group, a n-propyl group, an iso-propyl group, a n-butyl group, a tert-butyl group, a pentyl group, a hexyl group, and an octyl group. In addition to these, examples of R¹¹ include a methoxycarbonylpropyl group, an octyloxycarbonylpropyl group. Among others, R¹¹ is preferably a hydrogen atom or an alkyl group, and is particularly preferably a hydrogen atom, a methyl group, a tert-butyl group, a pentyl group, or an octyl group. R¹¹ and R¹² may be the same or different.

Specific examples of the compound represented by formula (1) include 2-(3-t-butyl-5-methyl-2-hydroxyphenyl)-5-chlorobenzotriazole, 2-(3,5-di-t-butyl-2-hydroxyphenyl)-5-chlorobenzotriazole, octyl 3-[3-tert-butyl-5-(5-chloro-2H-benzotriazol-2-yl)-4-hydroxyphenyl]propionate, methyl 3-(5-chloro-2H-benzotriazol-2-yl)-5-(1,1-dimethylethyl)-4-hydroxyphenylpropionate, and 2-(3,5-di-tert-amyl-2-hydroxyphenyl)benzotriazole.

The compound represented by formula (1) is a compound having a maximum absorption wavelength peak in a wavelength region of preferably 330 to 375 nm, and more preferably 345 to 360 nm.

### <Indole-based Compound>

The indole-based compound is a compound having an indole skeleton and being capable of absorbing ultraviolet rays. Preferred examples of the indole-based compound include a compound represented by the following formula (2).

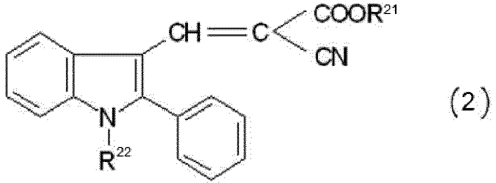

In formula (2), R²¹ represents a C1-3 alkyl group, and R²² represents a hydrogen atom, a C1-10 alkyl group, or a C7-10 aralkyl group.

Each of the alkyl groups of R²¹ and R²² may be an alkyl group having a linear structure, or may be an alkyl group having a branched structure. Examples of R²¹ in the formula (2) include a methyl group, an ethyl group, an isopropyl group, and a n-propyl group, among others, R²¹ is preferably a methyl group, an ethyl group, or an isopropyl group, and from the viewpoint of light resistance, R²¹ is more preferably a methyl group or an ethyl group.

R²² in formula (2) is preferably a C1-10 alkyl group, and more preferably a Cl-8 alkyl group. Examples of the C1-10 alkyl group include a methyl group, an ethyl group, an isopropyl group, a n-propyl group, an isobutyl group, a n-butyl group, a pentyl group, a hexyl group, a 2-ethylhexyl group, and a n-octyl group. Examples of the C7-10 aralkyl group include a benzyl group, a phenylethyl group, a phenylpropyl group, and a phenylbutyl group.

The indole-based compound is not particularly limited, but the maximum absorption wavelength peak is, for example, at 375 to 405 nm, preferably 380 to 400 nm, and more preferably 385 to 395 nm.

### <Porphyrin Compound>

The porphyrin compound which is used in the present invention is a compound having a porphyrin skeleton and being capable of absorbing ultraviolet rays. The porphyrin compound has a maximum absorption wavelength peak, for example, at 380 to 430 nm, preferably 390 to 425 nm, and more preferably 400 to 420 nm.

Specific examples of the porphyrin compound include a compound represented by the following formula (3).

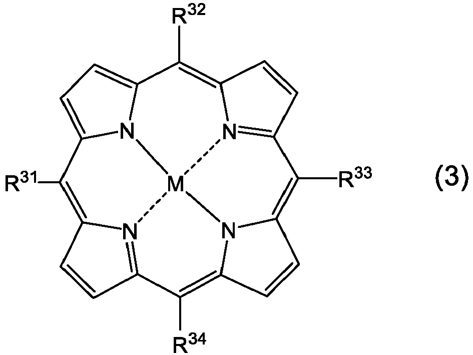

In formula (3), R³¹ to R³⁴ are each independently a hydrogen atom, or a hydrocarbon group which may have a hetero atom. Examples of M include metal atoms, such as copper, magnesium, cobalt, zinc, manganese, and iron, and among others, copper, manganese, iron, and cobalt are preferable, and more preferably copper. The number of carbon atoms of R³¹ to R³⁴ are each independently 1 to 24, preferably 1 to 18, and more preferably 6 to 12. Examples of the hetero atom include a nitrogen atom, a sulfur atom, an oxygen atom, and a halogen atom.

Examples of R³¹ to R³⁴ include an aromatic ring which may each have a substituent. The number of substituents in the aromatic ring of each of R³¹ to R³⁴ is not particularly limited, but is, for example, 0 to 5, preferably 0 to 3, more preferably 1 to 2, and most preferably 1.

The substituent herein is preferably a substituent having electron withdrawing ability. Specific examples of the substituent include halogen atoms, such as a chlorine atom, a bromine atom, a fluorine atom, and an iodine atom, a carboxyl group (-COOH), a nitrile group (-CN), a nitro group (-NO₂), an aldehyde group (-CHO), and an ester group (-COOR). R in the ester group is, for example, a C1-6 alkyl group, preferably a C1-4 alkyl group, and more preferably a C1-2 alkyl group. As the substituent, an ester group is preferable.

Examples of the aromatic ring include a benzene ring, naphthalene ring, a phenanthrene ring, and an anthracene ring. The aromatic ring may be a polycyclic ring comprising a benzene ring, the polycyclic ring having a hetero cycle which forms a 5-membered ring or a 6-membered ring with the benzene ring. Examples of the hetero atom which forms a hetero ring include a nitrogen atom, an oxygen atom, and a sulfur atom. The aromatic ring is preferably a benzene ring. The aromatic ring may be bonded directly to the porphyrin skeleton by a single bond.

Preferred specific examples of the porphyrin compound include a compound represented by the following formula (3-1). 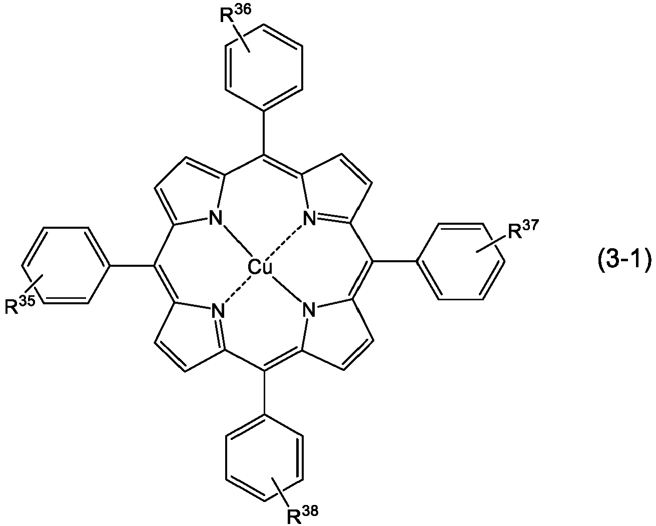 In formula (3-1), R³⁵ to R³⁸ are each independently the above-described substituent, and among others, an ester group is preferable. Each of the positions of R³⁵ to R³⁸ may be any of the ortho-, the meta-, and the para-position, but is preferably the para-position from the viewpoint of easiness of production.

The content of the ultraviolet ray absorber in the first thermoplastic resin layer is not limited as long as the transmittance at 400 nm is 20% or less, but is preferably more than 0.2 mass, more preferably 0.3 parts by mass or more, and still more preferably 0.4 parts by mass or more based on 100 parts by mass of the thermoplastic resin. Setting the content of the ultraviolet ray absorber to the lower limit value of these or more makes it easy to lower the transmittances at 400 to 420 nm.

The content of the ultraviolet ray absorber in the first thermoplastic resin layer is preferably 2.0 parts by mass or less, more preferably 1.5 parts by mass or less, and still more preferably 1.0 part by mass or less based on 100 parts by mass of the thermoplastic resin. By setting the content of the ultraviolet ray absorber to the upper limit value of these or less, coloration of the first thermoplastic resin layer due to the ultraviolet ray absorber can be prevented. In addition, the ultraviolet ray absorber can adequately be dispersed or dissolved in the thermoplastic resin, and the effects commensurate with the content are easily exhibited.

When two or more ultraviolet ray absorbers are contained, the content of the ultraviolet ray absorber is the total content of the ultraviolet ray absorbers.

In the present invention, the first thermoplastic resin layer preferably comprises a benzotriazole compound among the above-described ultraviolet ray absorbers. When the first thermoplastic resin layer comprises a benzotriazole compound, thereby ultraviolet rays in a relatively short wavelength region are absorbed adequately, and the transmittance at 400 nm is lowered, making it easy to prevent the deterioration of the optical function layer by light adequately.

The content of the benzotriazole compound in the first thermoplastic resin layer is preferably 0.15 parts by mass or more, more preferably 0.2 parts by mass or more, still more preferably 0.4 parts by mass or more, and particularly preferably 0.6 parts by mass or more based on 100 parts by mass of the thermoplastic resin. The content of the benzotriazole compound in the first thermoplastic resin layer is preferably 1.5 parts by mass or less, and more preferably 1.0 part by mass or less.

The benzotriazole compound may be used singly as the ultraviolet ray absorber. Even when the benzotriazole compound is used singly as the ultraviolet ray absorber, the transmittance at 400 nm can be lowered as described above by adjusting the blending amount.

The content of the benzotriazole compound, when used singly, is preferably 0.35 parts by mass or more, more preferably 0.4 parts by mass or more, and still more preferably 0.7 parts by mass or more, and is preferably 1.5 parts by mass or less, and more preferably 1.0 part by mass or less based on 100 parts by mass of the thermoplastic resin.

The benzotriazole compound is preferably used as the ultraviolet ray absorber together with an additional ultraviolet ray absorber. Preferred ultraviolet ray absorbers which are used together with the benzotriazole compound are at least one selected from the group consisting of an indole-based compound and a porphyrin compound.

By using the indole-based compound or the porphyrin compound together with the benzotriazole compound, ultraviolet rays in a wavelength region of 380 nm or less are absorbed adequately, and the transmittances at 400, 410, and 420 nm are lowered, so that the deterioration of the optical function layer by light can more effectively be prevented. Further, light of wavelengths of longer than 420 nm can sufficiently be transmitted, making it easy to increase the transmittance in the visible light region.

The content of the benzotriazole compound, when used together with the additional ultraviolet ray absorber, in the first thermoplastic resin layer is preferably 0.15 parts by mass or more, more preferably 0.2 parts by mass or more, still more preferably 0.4 parts by mass or more, and particularly preferably 0.6 parts by mass or more based on 100 parts by mass of the thermoplastic resin. The content of the benzotriazole compound in the first thermoplastic resin layer is preferably 1.2 parts by mass or less, and more preferably 1.0 part by mass or less. By setting the content of the benzotriazole compound to the lower limit value or more, ultraviolet rays in a relatively short wavelength region are absorbed adequately, and the transmittance at 400 nm is lowered, making it easy to prevent the deterioration of the optical function layer by light adequately. By setting the content of the benzotriazole content to the upper limit value or less, the benzotriazole compound is dispersed or dissolved adequately in the thermoplastic resin, and the effects commensurate with the content are easily exhibited. In addition, coloration of the first thermoplastic resin layer due to the benzotriazole compound can also be prevented.

The content of the at least one selected from the group consisting of an indole-based compound and a porphyrin compound, when used together with the benzotriazole compound, is preferably 0.001 parts by mass or more, more preferably 0.002 parts by mass or more, and still more preferably 0.003 parts by mass or more based on 100 parts by mass of the thermoplastic resin. The content is preferably 0.5 parts by mass or less, more preferably 0.3 parts by mass or less, still more preferably 0.1 parts by mass or less, and further still more preferably 0.03 parts by mass or less. Setting the content of these to the lower limit value or more makes it easy to lower the transmittances at 400, 410, and 420 nm. By setting the content to the upper limit value or less, coloration of the first thermoplastic resin layer due to the ultraviolet ray absorber can be prevented, and the effects commensurate with the content are easily exhibited.

When two or more ultraviolet ray absorbers are used together, two or more ultraviolet ray absorbers each having a different maximum absorption wavelength peak are preferably used together. That is, the ultraviolet ray absorber preferably comprises a shorter wavelength side ultraviolet ray absorber, and a longer wavelength side ultraviolet ray absorber having a maximum absorption wavelength peak existing on the longer wavelength side with respect to the maximum absorption wavelength peak of the shorter wavelength side ultraviolet ray absorber.

The shorter wavelength side ultraviolet ray absorber herein is a compound having a maximum absorption wavelength peak in a wavelength region of, for example, 300 to 380 nm, preferably 330 to 375 nm, and more preferably 345 to 360 nm. The shorter wavelength side ultraviolet ray absorber is, for example, the above-described benzotriazole compound, and is preferably the above-described compound represented by formula (1).

The longer wavelength side ultraviolet ray absorber is a compound having a maximum absorption wavelength peak in a wavelength region of, for example, 380 to 430 nm, preferably 390 to 425 nm, and more preferably 400 to 420 nm. The longer wavelength side ultraviolet ray absorber is, for example, at least one selected from the group consisting of the above-described indole compound and porphyrin compound, and is preferably at least one selected from the group consisting of the compound represented by formula (2) and the compound represented by formula (3).

The content of the shorter wavelength side ultraviolet ray absorber in the first thermoplastic resin layer is preferably 0.15 parts by mass or more, more preferably 0.2 parts by mass or more, still more preferably 0.4 parts by mass or more, and particularly preferably 0.6 parts by mass or more based on 100 parts by mass of the thermoplastic resin. The content of the shorter wavelength side ultraviolet ray absorber in the first thermoplastic resin layer is preferably 1.2 parts by mass or less, and more preferably 1.0 part by mass or less. By setting the content of the shorter wavelength side ultraviolet ray absorber to the lower limit value or more, ultraviolet rays are absorbed adequately, and the transmittance at 400 nm is easily lowered, making it easy to prevent the deterioration of the optical function layer by light adequately. By setting the content of the shorter wavelength side ultraviolet ray absorber to the upper limit value or less, the ultraviolet ray absorbers are dispersed or dissolved adequately in the thermoplastic resin, and the effects commensurate with the content are easily exhibited. In addition, coloration of the first thermoplastic resin layer due to the ultraviolet ray absorbers can also be prevented.

The content of the longer wavelength side ultraviolet ray absorber is preferably 0.001 parts by mass or more, more preferably 0.002 parts by mass or more, and still more preferably 0.003 parts by mass or more, and is preferably 0.5 parts by mass or less, more preferably 0.3 parts by mass or less, still more preferably 0.1 parts by mass or less, and further still more preferably 0.03 parts by mass or less based on 100 parts by mass of the thermoplastic resin. Setting the content of these to the lower limit value or more makes it easy to lower the transmittances at 400, 410, and 420 nm. By setting the content to the upper limit value or less, coloration of the first thermoplastic resin layer due to the ultraviolet ray absorbers can be prevented, and the effects commensurate with the content are easily exhibited.

### (Thermoplastic Resin)

The first thermoplastic resin layer comprises a thermoplastic resin. When the first thermoplastic resin layer comprises a thermoplastic resin, the first thermoplastic resin layer easily acts as a bonding layer, making the bondability to the optical function layer, a glass plate, or the like good.

Examples of the thermoplastic resin include, but not particularly limited to, a polyvinyl acetal resin, an ethylene-vinyl acetate copolymer resin, an ionomer resin, a polyurethane resin, and a thermoplastic elastomer. Using these resins makes it easy to secure the bondability to a glass plate. In the first thermoplastic resin layer, the thermoplastic resin may be used singly, or two or more thermoplastic resins may be used together. Among these, the thermoplastic resin is preferably at least one selected from the group consisting of a polyvinyl acetal resin and an ethylene-vinyl acetate copolymer resin, and the thermoplastic resin is more preferably a polyvinyl acetal resin in that the polyvinyl acetal resin, particularly when used together with a plasticizer, exhibits excellent bondability to a glass plate.

### (Polyvinyl Acetal Resin)

The polyvinyl acetate resin is not particularly limited as long as it is a polyvinyl acetal resin obtained by acetalizing polyvinyl alcohol with an aldehyde, but a polyvinyl butyral resin is suitable.

A preferred lower limit of the degree of acetalization of the polyvinyl acetal resin is 40 mol%, a preferred upper limit of the degree of acetalization of the polyvinyl acetal resin is 85 mol%, a more preferred lower limit is 60 mol%, and a more preferred upper limit is 75 mol%.

A preferred lower limit of the amount of the hydroxy group in the polyvinyl acetal resin is 15 mol%, a preferred upper limit of the amount of the hydroxy group in the polyvinyl acetal resin is 35 mol%. Setting the amount of the hydroxy group to 15 mol% or more easily makes the bondability to a glass plate or the like good, which easily makes the penetration resistance or the like of laminated glass good. Setting the amount of the hydroxy group to 35 mol% or less prevents making the laminated glass too hard. A more preferred lower limit of the amount of the hydroxy group is 25 mol%, and a more preferred upper limit of the amount of the hydroxy group is 33 mol%.

Also, when the polyvinyl butyral resin is used as the polyvinyl acetal resin, a preferred lower limit of the amount of the hydroxy group is 15 mol%, a preferred upper limit of the amount of the hydroxy group is 35 mol%, a more preferred lower limit is 25 mol%, and a more preferred upper limit is 33 mol% from the same viewpoint.

The degree of acetalization and the amount of the hydroxy group can be measured by, for example, a method in accordance with JIS K6728 "Testing methods for polyvinyl butyral."

The polyvinyl acetal resin can be prepared by acetalizing polyvinyl alcohol with an aldehyde. Polyvinyl alcohol is usually obtained by saponifying polyvinyl acetate, and polyvinyl alcohol having a degree of saponification of 80 to 99.8 mol% is generally used.

A preferred lower limit of the degree of polymerization of the polyvinyl acetal resin is 500, and a preferred upper limit of the degree of polymerization of the polyvinyl acetal resin is 4000. Setting the degree of polymerization to 500 or more makes the penetration resistance of laminated glass good. Setting the degree of polymerization to 4000 or less makes it easy to shape laminated glass. A more preferred lower limit of the degree of polymerization is 1000, and a more preferred upper limit of the degree of polymerization is 3600.

The aldehyde is not particularly limited, but generally a C1-10 aldehyde is suitably used. Examples of the C1-10 aldehyde include, but not particularly limited to, n-butyraldehyde, isobutyraldehyde, n-valeraldehyde, 2-ethylbutyraldehyde, n-hexyl aldehyde, n-octyl aldehyde, n-nonyl aldehyde, n-decyl aldehyde, formaldehyde, acetaldehyde, and benzaldehyde. Among others, n-butyraldehyde, n-hexyl aldehyde, and n-valeraldehyde are preferable, and more preferably n-butyraldehyde. These aldehydes may be used singly, or two or more of these aldehydes may be used together.

### (Ethylene-Vinyl Acetate Copolymer Resin)

The ethylene-vinyl acetate copolymer resin may be a non-crosslinked ethylene-vinyl acetate copolymer resin, or may be a high-temperature-crosslinked ethylene-vinyl acetate copolymer resin. As the ethylene-vinyl acetate copolymer resin, a resin of an ethylene-vinyl acetate-modified product, such as a saponified product of an ethylene-vinyl acetate copolymer and a hydrolysate of ethylene-vinyl acetate, can also be used.

The vinyl acetate content of the ethylene-vinyl acetate copolymer resin, as measured in accordance with JIS K 6730 "Testing methods for ethylene/vinyl acetate resin", is preferably 10 to 50% by mass, and more preferably 20 to 40% by mass. Setting the vinyl acetate content to the lower limit value of these or more enhances the bondability to glass, and easily makes the penetration resistance of laminated glass good. Setting the vinyl acetate content to the upper limit value of these or less enhances the breaking strength of the first thermoplastic resin layer, making the impact resistance of laminated glass good.

### (Ionomer Resin)

The ionomer resin is not particularly limited, and various ionomer resins can be used. Specific examples thereof include an ethylene-based ionomer, a styrene-based ionomer, a perfluorocarbon-based ionomer, a telechelic ionomer, and a polyurethane ionomer. Among these, an ethylene-based ionomer is preferable in terms of making the mechanical strength, the durability, the transparency, and the like of laminated glass good, and in terms of having excellent bondability to glass.

As the ethylene-based ionomer, an ionomer of an ethylene/unsaturated carboxylic acid copolymer is suitably used because of having excellent transparency and toughness. The ethylene/unsaturated carboxylic acid copolymer is a copolymer having at least a constitutional unit derived from ethylene and a constitutional unit derived from an unsaturated carboxylic acid, and may have a constitutional unit derived from an additional monomer.

Examples of the unsaturated carboxylic acid include acrylic acid, methacrylic acid, and maleic acid, and acrylic acid and methacrylic acid are preferable, and methacrylic acid is particularly preferable. Examples of the additional monomer include an acrylic acid ester, a methacrylic acid ester, and 1-butene.

The ethylene/unsaturated carboxylic acid copolymer preferably has 75 to 99 mol% of the constitutional unit derived from ethylene, and preferably has 1 to 25 mol% of the constitutional unit derived from an unsaturated carboxylic acid when the amount of all the constitutional units of the copolymer is assumed to be 100 mol%.

The ionomer of the ethylene/unsaturated carboxylic acid copolymer is an ionomer resin obtained by neutralizing or crosslinking at least part of the carboxyl groups of the ethylene/unsaturated carboxylic acid copolymer with a metal ion, and the degree of neutralization of the carboxyl groups is usually 1 to 90%, and preferably 5 to 85%.

Examples of the ion source in the ionomer resin include alkali metals, such as lithium, sodium, potassium, rubidium, and cesium, and polyvalent metals, such as magnesium, calcium, and zinc, and sodium and zinc are preferable.

The method for producing the ionomer resin is not particularly limited, and the ionomer resin can be produced by a conventionally known production method. For example, when an ionomer of an ethylene/unsaturated carboxylic acid copolymer is used as the ionomer resin, radical copolymerization is performed on, for example, ethylene and an unsaturated carboxylic acid at a high temperature and a high pressure to produce an ethylene/unsaturated carboxylic acid copolymer. The ionomer of the ethylene/unsaturated carboxylic acid copolymer can be produced by reacting the ethylene/unsaturated carboxylic acid copolymer and a metal compound containing the above-described ion source.

### (Polyurethane Resin)

Examples of the polyurethane resin include a polyurethane obtained by reacting an isocyanate compound and a diol compound, and a polyurethane obtained by reacting an isocyanate compound, a diol compound, and further, a chain extender, such as a polyamine. In addition, the polyurethane resin may be a polyurethane resin containing a sulfur atom. In that case, part or the whole of the diol may be selected from the group consisting of a polythiol and a sulfur-containing polyol. The polyurethane resin can make the bondability to organic glass good. Therefore, the polyurethane resin is suitably used when the glass plate is organic glass.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known styrene-based thermoplastic elastomer can be used. The styrene-based thermoplastic elastomer generally has a polymer block of a styrene monomer, which is a hard segment, and a polymer block of a conjugated diene compound or a hydrogenated block thereof, which is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefin may be a saturated aliphatic polyolefin, or may be an unsaturated aliphatic polyolefin. The aliphatic polyolefin may be a polyolefin obtained by using a chain olefin as a monomer, or may be a polyolefin obtained by using a cyclic olefin as a monomer. From the viewpoint of enhancing the storage stability and the sound insulation of the interlayer film effectively, the aliphatic polyolefin is preferably a saturated aliphatic polyolefin.

Examples of the material for the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

### (Plasticizer)

The first thermoplastic resin layer may further comprise a plasticizer. The first thermoplastic resin layer, when comprising a plasticizer, is made flexible, and as a result, makes laminated glass flexible. Further, the first thermoplastic resin layer can also exhibit high bondability to a glass plate. The first thermoplastic resin layer is particularly effective when comprising a plasticizer in the case where a polyvinyl acetal resin is used as the thermoplastic resin.

Examples of the plasticizer include organic ester plasticizers, such as a monobasic organic acid ester and a polybasic organic acid ester, and phosphorus plasticizers, such as an organic phosphate plasticizer and an organic phosphite plasticizer. Among others, an organic ester plasticizer is preferable.

Examples of the organic ester plasticizer include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexyl cyclohexyl adipate, diisononyl adipate, heptyl nonyl adipate, dibutyl sebacate, an oil-modified sebacic alkyd, a mixture of a phosphoric acid ester and an adipic acid ester, and a mixed ester of adipic acid. Examples of the mixed ester of adipic acid include an adipic acid ester prepared from two or more alcohols selected from the group consisting of C4-9 alkyl alcohols and C4-9 cyclic alcohols.

Among the plasticizers, triethylene glycol-di-2-ethylhexanonate (3GO) is particularly suitably used.

The content of the plasticizer in the first thermoplastic resin layer is not particularly limited, but a preferred lower limit is 30 parts by mass, and a preferred upper limit is 70 parts by mass based on 100 parts by mass of the thermoplastic resin. Setting the content of the plasticizer to 30 parts by mass or more makes laminated glass moderately flexible, making the handlability and the like good. By setting the content of the plasticizer to 70 parts by mass or less, separation of the plasticizer from the first thermoplastic resin layer is prevented. A more preferred lower limit of the content of the plasticizer is 35 parts by mass, and a preferred upper limit of the content of the plasticizer is 63 parts by mass.

The first thermoplastic resin layer may be such that the thermoplastic resin, or the thermoplastic resin and the plasticizer are the main components, and the total amount of the thermoplastic resin and the plasticizer is usually 70% by mass or more, preferably 80% by mass or more, and still more preferably 90% by mass or more based on the total amount of the first thermoplastic resin layer.

### (Other Additives)

Further, if necessary, the first thermoplastic resin layer may comprise additives such as an infrared ray absorber, an antioxidant, a light stabilizer, an adhesive strength modifier, a pigment, a dye, a fluorescent brightener, and a crystal nucleating agent.

The infrared ray absorber is not particularly limited as long as it has performance of shielding infrared rays, but, for example, tin-doped indium oxide particle is suitable. The first thermoplastic resin layer, when comprising an infrared ray absorber, can exhibit high heat shieldability.

Examples of the antioxidant include, but not particularly limited to, 2,2-bis[[[3-(3,5-di-tert-butyl-4-hydroxyphenyl)propionyl]oxy]methyl]propane-1,3-diol, 1,3-bis[3-(3,5-di-tert-butyl-4-hydroxyphenyl)propionate], 4,4'-thiobis(6-tert-butyl-3-methylphenol), 4,4'-dimethyl-6,6'-di(tert-butyl)[2,2'-methylenebis(phenol)], 2,6-di-t-butyl-p-cresol, and 4,4'-butylidenebis-(6-t-butyl-3-methylphenol).

Examples of the crystal nucleating agent include, but not particularly limited to, dibenzylidene sorbitol, dibenzylidene xylitol, dibenzylidene dulcitol, dibenzylidene mannitol, and calixarene. The crystal nucleating agent is suitably used when an ethylene-vinyl acetate copolymer resin is used as the thermoplastic resin.

As the adhesive strength modifier, for example, various magnesium salts or potassium salts, and the like are used.

The thickness of the first thermoplastic resin layer is preferably 0.05 to 1.5 mm, more preferably 0.1 to 1 mm, and still more preferably 0.2 to 0.6 mm. Setting the thickness of the first thermoplastic resin layer to 0.05 mm or more enables the first thermoplastic resin layer to exhibit sufficient ultraviolet ray absorption performance. In addition, the penetration resistance of laminated glass is made good. Setting the thickness of the first thermoplastic resin layer to 1.5 mm or less prevents lowering of the transparency of the first thermoplastic resin layer.

### (Second Thermoplastic Resin Layer)

The interlayer film for laminated glass of the present invention preferably further comprises the second thermoplastic resin layer on another surface side of the optical function layer. When the interlayer film for laminated glass comprises the second thermoplastic resin layer, thereby the interlayer film for laminated glass, comprising an optical function layer, can easily be bonded to two glass plates that forms the laminated glass.

When the transmittance of the second thermoplastic resin layer at a wavelength of 400 nm is assumed to be T400(2), and the transmittance of the first thermoplastic resin layer at a wavelength of 400 nm is assumed to be T400(1), a relationship of T400(2)>T400(1) is preferably satisfied. When the transmittance of the second thermoplastic resin layer, (T400(2)), is made higher as described above, thereby the visible light transmittance is easily increased, and coloration and the like are prevented, so that the interlayer film for laminated glass can suitably be used for a windshield of an automobile, and the like.

From such a viewpoint, the difference between the transmittances of the first and the second thermoplastic resin layers at a wavelength of 400 nm, (T400(2) - T400(1)), is preferably 5% or more, more preferably 10% or more, still more preferably 15% or more, and further still more preferably 25% or more.

The difference (T400(2) - T400(1)) is not particularly limited, but may be, for example, 60% or less, or may be 50% or less.

The transmittance of the second thermoplastic resin layer at a wavelength of 400 nm, (T400(2)), is not particularly limited, but is, for example, 20% or more, and preferably 30% or more, and is, for example, 80% or less, and preferably 60% or less.

When the transmittance of the second thermoplastic resin layer at a wavelength of 410 nm is assumed to be T410(2), and the transmittance of the first thermoplastic resin layer at a wavelength of 410 nm is assumed to be T410(1), a relationship of T410(2)>T410(1) is preferably satisfied. When the transmittance of the second thermoplastic resin layer, (T410(2)), is made higher as just described, thereby the visible light transmittance is easily increased, and coloration and the like are prevented, so that the interlayer film for laminated glass can suitably be used for a windshield of an automobile, and the like.

From the viewpoint of increasing the visible light transmittance and making it easy to prevent coloration, the difference between the transmittances of the first and the second thermoplastic resin layers at a wavelength of 410 nm, (T410(2) - T410(1)), is preferably 5% or more, more preferably 10% or more, still more preferably 20% or more, and further still more preferably 30% or more. The difference (T410(2) - T410(1)) is not particularly limited, but may be, for example, 70% or less, or may be 60% or less.

The transmittance of the second thermoplastic resin layer at a wavelength of 410 nm, (T410(2)), is not particularly limited, but is, for example, 40% or more, and preferably 50% or more, and is, for example, 95% or less, and preferably 80% or less.

When the transmittance of the second thermoplastic resin layer at a wavelength of 420 nm is assumed to be T420(2), and the transmittance of the first thermoplastic resin layer at a wavelength of 420 nm is assumed to be T420(1), a relationship of T420(2)>T420(1) is preferably satisfied. When the transmittance of the second thermoplastic resin layer, (T420(2)), is made higher as just described, thereby the visible light transmittance is easily increased, and coloration and the like are prevented, so that the interlayer film for laminated glass can suitably be used for a windshield of an automobile, and the like.

From the viewpoint of increasing the visible light transmittance and making it easy to prevent coloration, the difference between the transmittances of the first and the second thermoplastic resin layers at a wavelength of 420 nm, (T420(2) - T420(1)), is preferably 3% or more, more preferably 5% or more, still more preferably 20% or more, and further still more preferably 25% or more.

The difference (T420(2) - T420(1)) is not particularly limited, but may be, for example, 80% or less, or may be 70% or less.

The transmittance of the second thermoplastic resin layer at a wavelength of 420 nm, (T420(2)), is not particularly limited, but is, for example, 45% or more, and preferably 55% or more, and is, for example, 95% or less, and preferably 90% or less.

The second thermoplastic resin layer is a layer comprising a thermoplastic resin, and examples of the thermoplastic resin which is used in the second thermoplastic resin layer include, but not particularly limited to, a polyvinyl acetal resin, an ethylene-vinyl acetate copolymer resin, an ionomer resin, a polyurethane resin, and a thermoplastic elastomer. Using these resins makes it easy to secure the bondability to a glass plate.

In the second thermoplastic resin layer, the thermoplastic resin may be used singly, or two or more thermoplastic resins may be used together. Among these, the thermoplastic resin is preferably at least one selected from the group consisting of a polyvinyl acetal resin and an ethylene-vinyl acetate copolymer resin, and the thermoplastic resin is more preferably a polyvinyl acetal resin in that the polyvinyl acetal resin, particularly when used together with a plasticizer, exhibits excellent bondability to glass.

As the thermoplastic resin in the first thermoplastic resin layer and the thermoplastic resin in the second thermoplastic resin, the same types of resins may be used, or different types of resins may be used, but the same types of resins are preferably used. For example, when the thermoplastic resin in the first thermoplastic resin layer is a polyvinyl acetal resin, the thermoplastic resin in the second thermoplastic resin layer is preferably a polyvinyl acetal resin, too. Further, for example, when the thermoplastic resin in the first thermoplastic resin layer is an ethylene-vinyl acetate copolymer resin, the thermoplastic resin in the second thermoplastic resin layer is preferably an ethylene-vinyl acetate copolymer resin, too.

Details on the polyvinyl acetal resin, the ethylene-vinyl acetate copolymer resin, the ionomer resin, the polyurethane resin, and the thermoplastic elastomer are as described in First Thermoplastic Resin Layer, and therefore the description is omitted.

The second thermoplastic resin layer may further comprise a plasticizer. The second thermoplastic resin layer, when comprising a plasticizer, is made flexible, and as a result, makes laminated glass flexible. Further, the second thermoplastic resin layer can exhibit enhanced bondability to a glass plate. The second thermoplastic resin layer is particularly effective when comprising a plasticizer in the case where a polyvinyl acetal resin is used as the thermoplastic resin.

Examples of the plasticizer include organic ester plasticizers, such as a monobasic organic acid ester and a polybasic organic acid ester, and phosphorus plasticizers, such as an organic phosphorus plasticizer and an organic phosphite plasticizer. Specific examples of the plasticizer are as described above. Among these, an organic ester plasticizer is preferable, and triethylene glycol-di-2-ethylhexanoate (3GO) is particularly preferably used. Also, in the second thermoplastic resin layer, the plasticizer may be used singly, or two or more plasticizers may be used together.

The content of the plasticizer in the second thermoplastic resin layer is not particularly limited, but a preferred lower limit is 30 parts by mass, and a preferred upper limit is 70 parts by mass based on 100 parts by mass of the thermoplastic resin. Setting the content of the plasticizer to 30 parts by mass or more makes laminated glass moderately flexible, making handlability and the like good. By setting the content of the plasticizer to 70 parts by mass or less, separation of the plasticizer from the second thermoplastic resin layer is prevented. A more preferred lower limit of the content of the plasticizer is 35 parts by mass, and a more preferred upper limit of the content of the plasticizer is 63 parts by mass.

The second thermoplastic resin layer is such that the thermoplastic resin, or the thermoplastic resin and the plasticizer are the main components, and the total amount of the thermoplastic resin and the plasticizer is usually 70% by mass or more, preferably 80% by mass or more, and still more preferably 90% by mass or more based on the total amount of the second thermoplastic resin.

The second thermoplastic resin layer preferably comprises an ultraviolet ray absorber. When the second thermoplastic resin layer comprises an ultraviolet ray absorber, deterioration of the second thermoplastic resin layer due to sunlight or the like can thereby be prevented. In addition, when a laminated glass comprising the interlayer film for laminated glass is used as, for example, window glass, transmission of ultraviolet rays into the indoor side through the window glass can be prevented.

The ultraviolet ray absorber is not particularly limited, and a known ultraviolet ray absorber may be used, or the above-described ultraviolet ray absorber may be used, but the benzotriazole compound is preferably used. By using the benzotriazole compound, ultraviolet rays included in sunlight can effectively be absorbed by the ultraviolet ray absorber. The details on the benzotriazole compound are as described above, and the above-described benzotriazole compound represented by formula (1) is preferably used.

In the second thermoplastic resin layer, the ultraviolet ray absorber may be used singly, or two or more ultraviolet ray absorbers may be used together.

The ultraviolet ray absorber in the second thermoplastic resin layer is a compound having a maximum absorption wavelength peak in a wavelength region of, for example, 330 to 390 nm, preferably 330 to 375 nm, and more preferably 345 to 360 nm. By using such a compound, ultraviolet rays included in sunlight can effectively be absorbed by the ultraviolet ray absorber.

The content of the ultraviolet ray absorber based on 100 parts by mass of the thermoplastic resin in the second thermoplastic resin layer is preferably smaller than the content of the ultraviolet ray absorber based on 100 parts by mass of the thermoplastic resin in the first thermoplastic resin layer. By adjusting the contents of the ultraviolet ray absorber in the two resin layers in this way, the visible light transmittance is improved, coloration is prevented, and the deterioration of the optical function layer, and the first and the second thermoplastic resin layers by light can be prevented. In addition, when a laminated glass is used for window glass or the like, irradiation of the indoor side with ultraviolet rays can effectively be prevented.

The specific content of the ultraviolet ray absorber in the second thermoplastic resin layer is, for example, preferably 0.02 parts by mass or more, more preferably 0.10 parts by mass or more, and still more preferably 0.15 parts by mass or more, and is preferably 1.0 part by mass or less, more preferably 0.5 parts by mass or less, and still more preferably 0.4 parts by mass or less based on 100 parts by mass of the thermoplastic resin.

### (Other Additives)

Further, if necessary, the second thermoplastic resin layer may comprise additives such as an infrared ray absorber, an antioxidant, a light stabilizer, an adhesive strength modifier, a pigment, a dye, a fluorescent brightener, and a crystal nucleating agent. The details on these additives are as described above.

The thickness of the second thermoplastic resin layer is preferably 0.05 to 1.5 mm, more preferably 0.1 to 1 mm, and still more preferably 0.2 to 0.6 mm. Setting the thickness of the second thermoplastic resin layer to 0.05 mm or more makes the penetration resistance and the bondability of laminated glass good. Setting the thickness of the second thermoplastic resin layer to 1.5 mm or less prevents lowering of the transparency of the second thermoplastic resin layer.

Each of the first and the second thermoplastic resin layers may be formed with, for example, a thermoplastic resin composition comprising materials that constitute each thermoplastic resin layer, such as a thermoplastic resin, an ultraviolet ray absorber, and a plasticizer and other additives, which are added as necessary.

Specifically, each of the first and the second thermoplastic resin layers may be formed by subjecting the thermoplastic resin composition obtained by kneading the materials that constitute each thermoplastic resin layer to extrusion shaping, press molding, or the like. In this case, when a plasticizer is used, the thermoplastic resin composition may be prepared by dissolving the ultraviolet ray absorber in the plasticizer, and kneading a mixture of the ultraviolet ray absorber and the plasticizer with the thermoplastic resin, such as a polyvinyl acetal resin.

### [A laminated Glass]

A laminated glass of the present invention comprises a pair of glass plates, and the above-described interlayer film for laminated glass, disposed between the pair of glass plates. The pair of glass plates are bonded by the interlayer film for laminated glass to form the laminated glass.

The glass plate which is used in the laminated glass may be any of inorganic glass and organic glass, but is preferably inorganic glass. Examples of the inorganic glass include, but not particularly limited to, clear glass, float plate glass, polished plate glass, figured glass, meshed plate glass, wired plate glass, and green glass.

As the organic glass, organic glass generally called resin glass is used, and examples thereof include, but not particularly limited to, organic glass formed from a resin such as polycarbonate, an acrylic resin, an acrylic copolymer resin, or a polyester.

The two glass plates may be constituted by the same types of materials, or may be constituted by different materials from each other. For example, one and the other may be organic glass and inorganic glass, respectively, but both of the two glass plates are preferably inorganic glass or organic glass.

The thickness of each glass plate is not particularly limited, but is, for example, about 0.1 to 15 mm, and preferably 0.5 to 5 mm. The thicknesses of respective glass plates may be the same as or different from each other, but are preferably the same.

The laminated glass of the present invention has a visible light transmittance of, for example, 50% or more, but preferably 70% or more, and still more preferably 80% or more. By setting the visible light transmittance to 70% or more, sufficient visibility can be secured when the laminated glass of the present invention is used for window glass or the like, and the laminated glass can also suitably be used as a windshield for an automobile. The upper limit of the visible light transmittance is not particularly limited, but may be, for example, 99%, and may practically be 95%. In the present invention, by increasing the visible light transmittance to secure the light permeability of the laminated glass, and lowering the transmittance at a particular wavelength, the deterioration of the optical function layer by light can be prevented.

The laminated glass of the present invention is used as, for example, window glass, and is used in, for example, outdoor window where one of the glass plates of the laminated glass is disposed on the outdoor side on which sunlight is incident. The outdoor window in the present specification means window which is disposed at a position on which sunlight is incident. Accordingly, the outdoor window is usually disposed at an external surface of a building, or an external surface of a vehicle, but inner window of double window, and the like are included in the outdoor window in the present specification when they are disposed at a position on which sunlight is incident.

Specifically, the laminated glass of the present invention is preferably used for window glass of various vehicles, such as an automobile, a train, and a ship, and various buildings, such as an office building, an apartment, a single house, a hall, and a gymnasium, and the like, and is more preferably used for window glass for an automobile. The window glass for an automobile may be any of a windshield, rear glass, side glass, and roof glass, but is preferably used for a windshield. When the laminated glass comprising an optical function layer is used for a windshield, the laminated glass can suitably be used for a HUD application.

In the interlayer film for laminated glass of the present invention, the first thermoplastic resin layer may be disposed on the outdoor side with respect to the optical function layer. That is, in window glass for an automobile, the first thermoplastic resin layer may be disposed on the outer side of the car with respect to the optical function layer.

When the first thermoplastic resin layer is disposed on the outdoor side with respect to the optical function layer, the light from sunlight is thereby incident on the optical function layer through the first thermoplastic resin layer. In the present invention, ultraviolet rays and light at around 400 nm are absorbed sufficiently by the first thermoplastic resin layer, and therefore the deterioration of the optical function layer by light can adequately be prevented.

### (Laminated Structure)

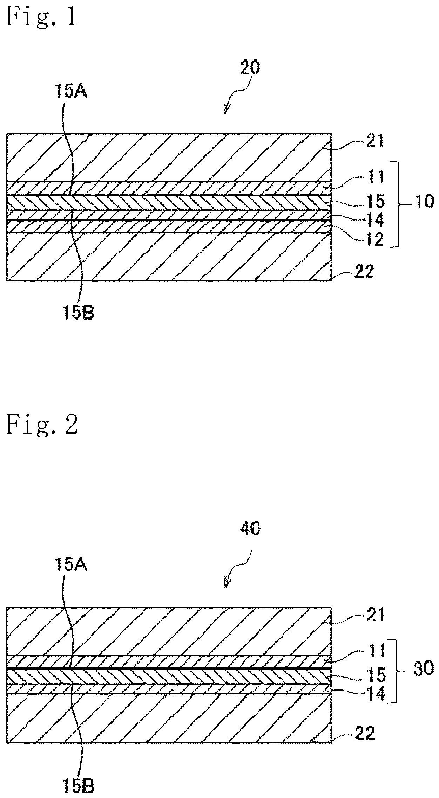

Next, the laminated structure of the interlayer film for laminated glass and the laminated glass of the present invention will be described with reference to the drawings. Fig. 1 shows an interlayer film for laminated glass and a laminated glass of the first embodiment. The interlayer film for laminated glass of the first embodiment comprises first and second thermoplastic resin layers.

As shown in Fig. 1, the interlayer film 10 for laminated glass in the present embodiment comprises first and second thermoplastic resin layers 11, 12, and an optical function layer 15, wherein the first thermoplastic resin layer 11 is disposed on the one surface 15A side of the optical function layer 15, and the second thermoplastic resin layer 12 is disposed on the other surface 15B side of the optical function layer 15. However, in Fig. 1, the optical function layer 15 is a layer formed on a base material 14, and accordingly the base material 14 is provided on the other surface 15B of the optical function layer 15. Therefore, the second thermoplastic resin layer 12 is laminated on the optical function layer 15 through the base material 14.

The laminated glass 20 of the present embodiment comprises two glass plates (first and second glass plates) 21, 22, and the interlayer film 10 for laminated glass, disposed between these glass plates 21, 22. The first and the second thermoplastic resin layers 11, 12 of the interlayer film 10 for laminated glass are bonded to the first and the second glass plates 21, 22, respectively. The first glass plate 21 is a glass plate which is disposed on the outdoor side (as for window glass for an automobile, the outer side of the car), and the second glass plate 22 is a glass plate which is disposed on the indoor side (as for window glass for an automobile, the inner side of the car).

Fig. 1 shows the first embodiment in which the interlayer film 10 for laminated glass comprises the first and the second thermoplastic resin layers 11, 12, but the aspect of the interlayer film 10 for laminated glass comprising the first and the second thermoplastic resin layers 11, 12 is not limited to the constitution in Fig. 1.

For example, the base material 14 may be provided on the one surface 15A of the optical function layer 15, and in that case, the first thermoplastic resin layer 11 is laminated on the optical function layer 15 through the base material 14.

The base material 14 may be omitted, and both surfaces of the optical function layer 14 may directly be laminated on the first and the second thermoplastic resin layers 11, 12, respectively.

Further, a cover material (not shown) may be laminated on the one surface 15A of the optical function layer 15, and both surfaces of the optical function layer 15 may be covered with the base material 14 and the cover material. In this case, the first and the second thermoplastic resin layers 11, 12 may be laminated on the optical function layer 15 through the cover material and the base material, respectively. Needless to say, the base material 14 may be laminated on the one surface 15A of the optical function layer 15, and the cover material may be laminated on the other surface 15B of the optical function layer 15.

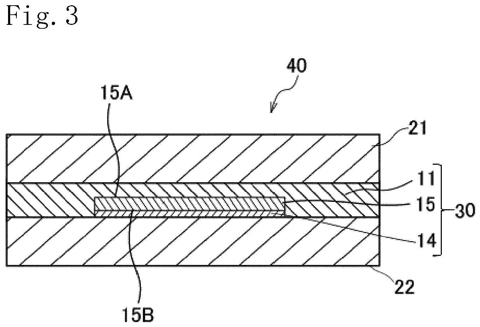

Figs. 2 and 3 show an interlayer film 30 for laminated glass of the second embodiment, a laminated glass 40 comprising the interlayer film 30 for laminated glass. The interlayer film 30 for laminated glass of the second embodiment does not comprise the second thermoplastic resin layer, but comprises the first thermoplastic resin layer 11 and the optical function layer 15. The first thermoplastic resin layer 11 is disposed on the one surface 15A side of the optical function layer 15. The optical function layer 15 is a layer formed on the base material 14, as shown in Fig. 2, and accordingly the base material 14 is provided on the other surface 15B of the optical function layer 15.

In the laminated glass 40 of the present embodiment, the first thermoplastic resin layer 11 is bonded to the first glass plate 21, and the base material 14 of the optical function layer 15 is bonded to the second glass plate 22. The base material 14 may be bonded to the second glass plate 22 through an adhesive or the like, or may be bonded to the second glass plate 22 by compression bonding or the like.

However, the base material 14 may be omitted, and the optical function layer 15 may be laminated directly on the second glass plate 22. In this case, the optical function layer 15 may be formed by, for example, coating the second glass plate 22 with a composition for the optical function layer.

In addition, for example, in the second embodiment, the optical function layer 15 may be formed in such a way as to be smaller than the first thermoplastic resin layer 11 when viewed in a plan view, and disposed in such a way as to be embedded in the first thermoplastic resin layer 11, as shown in Fig. 3. In this case, the first thermoplastic resin layer 11 may be bonded to the first glass plate 21, and also be bonded to the second glass 22 on the outer peripheral side of the optical function layer 15, and thereby the two glass plates 21, 22 may form a structure of the laminated glass. As shown in Fig. 3, when the optical function layer 15 is formed in such a way as to be smaller than the first thermoplastic resin layer 11, the thickness of the first thermoplastic resin layer 11 means the thickness of the first thermoplastic resin layer 11 at a part where the optical function layer 15 is provided.

In the second embodiment shown in Figs. 2 and 3, the base material 14 may be provided on the one surface 15A instead of being laminated on the other surface 15B of the optical function layer 15, or the cover material and the base material may be laminated on both surfaces of the optical function layer 15, respectively.

The interlayer films 10, 30 for laminated glass in respective embodiments described above are each just one example, may each comprise any laminated structure as long as the effects of the present invention are exhibited, and may appropriately comprise a layer other than the layers described above.

### (Production Method)

The interlayer film for laminated glass of the present invention can be produced by laminating at least the first thermoplastic resin layer and the optical function layer, or the first thermoplastic resin layer, the optical function layer, and the second thermoplastic resin layer, and subjecting a resultant laminated body to thermocompression bonding or the like although the production method is not particularly limited to this. On this occasion, the base material, the cover material, and the like may appropriately be installed on the optical function layer. The laminated glass can also be produced similarly, and can be produced by laminating at least the first thermoplastic resin layer and the optical function layer, or the first thermoplastic resin layer, the optical function layer, and the second thermoplastic resin layer between the two glass plates, and subjecting a resultant laminated body to thermocompression bonding or the like.

In the production method, the interlayer film for laminated glass or the laminated glass may be produced by forming the optical function layer directly on a glass plate for the laminated glass, and laminating the first thermoplastic resin layer and the like on the optical function layer.

However, the methods for producing the interlayer film for laminated glass and the laminated glass are not limited to those described above, and any method may be adopted as long as the interlayer film for laminated glass and the laminated glass of the present invention can be produced.

### [Image Display System]

The present invention also provides an image display system comprising the above-described laminated glass and a light source. As described above, the laminated glass may be window glass, the first glass plate is disposed on the outdoor side (as for an automobile, the outer side of the car), and the second glass plate is disposed on the indoor side (as for an automobile, the inner side of the car). The optical function layer provided in the interlayer film for laminated glass is a volume hologram, and the hologram is formed by subjecting the interlayer film for laminated glass to exposure by irradiating the interlayer film for laminated glass with interference light in advance to store image information. The volume hologram is usually subjected to multiple exposure, and a plurality of pieces of image information is recorded in such a way as to be superimposed.

The light source is an apparatus that emits reproduction light. The reproduction light emitted from the light source irradiates the laminated glass. The laminated glass is irradiated with the reproduction light from the indoor side (that is, the inner side of the car), and the image information stored in the optical function layer of the laminated glass is reproduced by the reproduction light irradiating the laminated glass. The reproduced image is generally displayed as a virtual image on the outdoor side (that is, the outer side of the car). Thereby, in the image display system, the reproduced image can visually be recognized from the indoor side (the inner side of the car).

When the laminated glass is made into a windshield of an automobile, the image display system of the present invention can suitably be used as HUD of an automobile.

### Examples

The present invention will be described in more detail with reference to Examples, but the present invention is not limited at all by these Examples.

### [Transmittance at Each Wavelength]

The transmittance of each thermoplastic resin layer at each wavelength was measured using a spectrophotometer ("U-4100" manufactured by Hitachi High-Tech Corporation) under a condition of a slit width: 8 nm and a scan speed: 300 nm/min.

### [Visible Light Transmittance]

The visible light transmittance (Tv) of laminated glass was measured in accordance with JISR3106(1998) using a spectrophotometer ("U-4100" manufactured by Hitachi High-Tech Corporation).

### [Light Resistance Test]

A laminated glass obtained in Examples and Comparative Examples was irradiated with ultraviolet rays from the first glass plate side for 1000 hours in accordance with JIS R 3205(2005) using an ultraviolet ray irradiation instrument (HLG-2S, manufactured by Suga Test Instruments Co., Ltd.) to measure Tv of the laminated glass after the irradiation with ultraviolet rays. Tv before the irradiation with ultraviolet rays was also measured to measure ΔTv from (Tv before irradiation with ultraviolet rays - Tv after irradiation with ultraviolet rays). A change in yellowness ΔYI and the amount of a change in color difference ΔE were also measured similarly. With respect to ΔYI, YIs in the XYZ color system with light C before and after the irradiation with ultraviolet rays were calculated in accordance with JIS K7373 using the spectrophotometer ("U-4100" manufactured by Hitachi High-Tech Corporation). With respect to ΔE, the tristimulus values of the laminated glass before and after the irradiation with ultraviolet rays were measured using the spectrophotometer ("U-4100" manufactured by Hitachi High-Tech Corporation) to calculate the lightness index and the chromaticness index and determine the color difference ΔE according to the Hunter's color difference formula described in JIS Z8731.

Components used in Examples and Comparative Examples are as follows.

### (Resin)

PVB: polyvinyl butyral resin, degree of acetalization 69 mol%, amount of hydroxy group 30 mol%, degree of acetylation 1 mol%, degree of polymerization 1700

### (Plasticizer)

### 3GO: triethylene glycol di-2-ethylhexanoate

### (Ultraviolet Ray Absorber)

Benzotriazole compound: a compound represented by formula (1), wherein X represents a chlorine atom, R¹¹ represents a methyl group, and R¹² represents a tert-butyl group. Trade name. Tinuvin 326 manufactured by Ciba Specialty Chemicals, Inc., maximum absorption wavelength peak 353 nm Porphyrin compound: a compound represented by formula (3-1), wherein R³⁵, R³⁶, R³⁷, and R³⁸ are each coordinated at the para-position and each represented by - COOCH₃. Maximum absorption wavelength peak 415 nm

The porphyrin-based compound was prepared by the following method.

In 50 mL of chloroform, 0.31 g (0.37 mmol) of tetrakis(4-carboxyphenyl)porphyrin tetramethyl ester (manufactured by Wako Pure Chemical Industries, Ltd.) was dissolved, 40 mL of a saturated methanol solution in which 2.11 g (15.5 mmol) of copper chloride was dissolved was added therein, and a resultant solution was heated to reflux for 24 hours. After 24 hours, a resultant reaction solution was cooled to room temperature, transferred to a separatory funnel, and washed with distilled water. Thereafter, the remaining organic layer was distilled away under reduced pressure using an evaporator. Thereafter, the residue was dissolved in a small amount of chloroform, and reprecipitation was conducted with hexane and diethyl ether to obtain an objective substance (0.27 g, yield 80%).

An indole compound was prepared by the following method.

To 120 ml of methanol, 23.5 g (0.10 mol) of 1-methyl-2-phenyl-1H-indole-3-carboaldehyde, and 11.9 g (0.12 mol) of methyl cyanoacetate were added. Subsequently, 2.5 g (0.03 mol) of piperidine was added thereto to conduct reaction under reflux for 6 hours, and a resultant reaction solution was cooled to room temperature to obtain a deposited crystal. The resultant crystal was washed with a small amount of an alcohol, and was then dried to obtain 30.9 of a pale yellow crystal of the indole-based compound represented by the formula (2) wherein R²¹ is a methyl group, and R²² is a methyl group. The obtained indole compound had a melting point of 193.7°C and a maximum absorption wavelength peak at 391 nm.

### Example 1

### (Preparation of First Thermoplastic Resin Layer)

The polyvinyl butyral resin, the plasticizer, and the ultraviolet ray absorber were mixed according to combination shown in Table 1, and a resultant thermoplastic resin composition was extrusion-formed with a twin-screw anisotropic extruder to prepare a first thermoplastic resin layer having a thickness of 380 µm. When the components were mixed, an aqueous solution of a magnesium salt of an organic acid as an adhesive strength modifier was further added in such a way that the Mg concentration in the first thermoplastic resin layer was 65 ppm. The concentration of Mg can be determined by measuring the Mg content with an ICP emission analyzer ("ICPE-9000" manufactured by

### SHIMADZU CORPORATION).

### (Preparation of Optical Function Layer)

A TAC (cellulose triacetate) film having a thickness of 60 µm, as a base material, was coated with a composition for an optical function layer, comprising an acrylic-based monomer as a photoreactive monomer, a polyurethane as a matrix polymer, a photopolymerization initiator, and a dye, and the composition for an optical function layer was dried to obtain the optical function layer having a thickness of 3 µm, the layer laminated on one surface of the base material. Next, the optical function layer was subjected to exposure using a light source of laser of a wavelength of 532 nm to react and polymerize the photoreactive monomer. When the exposure was conducted, light waves from two directions were interfered with each other on the optical function layer, thereby making an optical function layer having a hologram.

### (Preparation of Second Thermoplastic Resin Layer)

A second thermoplastic resin layer was prepared in the same manner as in the preparation of the first thermoplastic resin layer, except that the blending amount of the ultraviolet ray absorber was changed as shown in Table 1.

### (Preparation of Laminated Glass)

The resultant first and second thermoplastic resin layers were retained under a constant temperature and humidity condition of 23°C and a relative humidity of 28% for 4 hours. Thereafter, two transparent clear glass plates (2.5 mm in thickness) were prepared, and on one of the clear glass plates, the second thermoplastic resin layer, the optical function layer with the base material, the first thermoplastic resin layer, and the other one of the clear glass plate were stacked in the mentioned order, thereby making a laminated body. The resultant laminated body was transferred into a rubber bag, the rubber bag was connected to a suction depressurization system to heat the rubber bag at an outside air heating temperature and simultaneously retain the rubber bag under a reduced pressure of -600 mmHg (absolute pressure 160 mmHg) for 10 minutes and heating in such a way that the temperature (preliminary compression-bonding temperature) of the laminated body reached 60°C respectively, and thereafter the pressure was returned to the atmospheric pressure to conduct temporary compression bonding. After the laminated body, which was temporarily compression-bonded, was retained in an autoclave under a condition of a temperature of 140°C and a pressure of 1.3 MPa for 10 minutes, the temperature was decreased to 50°C, and the pressure was returned to the atmospheric pressure, thereby completing the main compression bonding, and thus a laminated glass was obtained. The laminated glass comprised layer constitution of first glass plate/first thermoplastic resin layer/optical function layer/base material/second thermoplastic resin layer/second glass plate.

### Examples 2 to 5 and Comparative Examples 1 and 2

Examples 2 to 5 and Comparative Examples 1 and 2 were carried out in the same manner as Example 1, except that the type and the blending amount of the ultraviolet ray absorber blended in the first thermoplastic resin layer were changed as shown in Table 1. In Comparative Example 1, an ultraviolet ray absorber was not blended in the first thermoplastic resin layer.

**[Table 1]**

| | | | | | Example 1 | Example 2 | Example 3 | Example 4 | Example 5 | Comparative Example 1 | Comparative Example 2 |
|---|---|---|---|---|---|---|---|---|---|---|---|
| First thermoplastic resin layer | Resin | Type | | - | PVB | PVB | PVB | PVB | PVB | PVB | PVB |
| | | Parts by mass | | Number of parts | 100 | 100 | 100 | 100 | 100 | 100 | 100 |
| | Plasticizers | Type | | - | 3GO | 3GO | 3GO | 3GO | 3GO | 3GO | 3GO |
| | | Parts by mass | | Number of parts | 40 | 40 | 40 | 40 | 40 | 40 | 40 |
| | Ultraviolet ray absorber 1 | Type | | - | Benzotriazole | Benzotriazole | Benzotriazole | Benzotriazole | Benzotriazole | - | Benzotriazole |
| | | Parts by mass | | Number of parts | 0.4 | 0.8 | 0.8 | 0.2 | 0.95 | - | 0.2 |
| | Ultraviolet ray absorber 2 | Type | | - | - | - | Indole | Porphyrin | Porphyrin | - | - |
| | | Parts by mass | | Number of parts | - | - | 0.01 | 0.0036 | 0.0036 | - | - |
| | Transmittance | T400(1) | | % | 15.6 | 3.5 | 0.8 | 19.8 | 2.1 | 87.4 | 34.6 |
| | | T410(1) | | % | 59.4 | 42.0 | 19.4 | 24.2 | 14.2 | 87.8 | 72.1 |
| | | T420(1) | | % | 80.4 | 77.0 | 57.7 | 19.2 | 17.5 | 87.6 | 84.7 |
| Optical function layer | Photo reactive monomer | Type | | - | Acrylic | Acrylic | Acrylic | Acrylic | Acrylic | Acrylic | Acrylic |
| | Matrix polymer | Type | | - | Polyurethane | Polyurethane | Polyurethane | Polyurethane | Polyurethane | Polyurethane | Polyurethane |
| Base material | | Type | | - | TAC | TAC | TAC | TAC | TAC | TAC | TAC |
| Second thermoplastic resin layer | Resin | Type | | - | PVB | PVB | PVB | PVB | PVB | PVB | PVB |
| | | Parts by mass | | Number of parts | 100 | 100 | 100 | 100 | 100 | 100 | 100 |
| | Plasticizers | Type | | - | 3GO | 3GO | 3GO | 3GO | 3GO | 3GO | 3GO |
| | | Parts by mass | | Number of parts | 40 | 40 | 40 | 40 | 40 | 40 | 40 |
| | Ultraviolet ray absorber 1 | Type | | - | Benzotriazole | Benzotriazole | Benzotriazole | Benzotriazole | Benzotriazole | Benzotriazole | Benzotriazole |
| | | Parts by mass | | Number of parts | 0.2 | 0.2 | 0.2 | 0.2 | 0.2 | 0.2 | 0.2 |
| | Transmittance | T400(2) | | % | 34.6 | 34.6 | 34.6 | 34.6 | 34.6 | 34.6 | 34.6 |
| | | T410(2) | | % | 72.1 | 72.1 | 72.1 | 72.1 | 72.1 | 72.1 | 72.1 |
| | | T420(2) | | % | 84.7 | 84.7 | 84.7 | 84.7 | 84.7 | 84.7 | 84.7 |
| T400(2)-T400(1) | | | | % | 19.0 | 31.1 | 33.9 | 14.9 | 32.6 | -52.8 | 0.0 |
| T410(2)-T410(1) | | | | % | 12.7 | 30.1 | 52.7 | 47.9 | 57.9 | -15.7 | 0.0 |
| T420(2)-T420(1) | | | | % | 4.3 | 7.7 | 27.0 | 65.5 | 67.1 | -2.9 | 0.0 |
| Visible light transmittance of laminated glass | | | | % | 84.4 | 84.0 | 83.0 | 82.0 | 81.7 | 84.5 | 84.1 |
| Evaluation results | Light resistance test | | Δ Tv | - | 2.3 | 2.6 | 1.8 | 2.3 | 1.8 | -1.3 | -0.7 |
| | | | Δ YI | - | -1.9 | -1.3 | -0.3 | 0.6 | 0.8 | 13.4 | 10.9 |
| | | | Δ E | - | 2.2 | 1.4 | 0.9 | 1.7 | 0.9 | 8.8 | 6.8 |

As shown in Examples above, by allowing the first thermoplastic resin layer to contain an ultraviolet ray absorber, and setting the transmittance at 400 nm to a predetermined value or less, changes in the visible light transmittance, the yellowness, and the color difference were small, and the deterioration by light of the optical function layer that constitutes the volume hologram was able to be prevented even after the irradiation with ultraviolet rays for a long period of time.

### Reference Signs List

- 10, 30: Interlayer film for laminated glass
- 11: First thermoplastic resin layer
- 12: Second thermoplastic resin layer
- 14: Base material
- 15: Optical function layer
- 20, 40: Laminated glass
- 21: First glass plate
- 22: Second glass plate

## Claims

1. An interlayer film for laminated glass, comprising:
an optical function layer; and a first thermoplastic resin layer provided on one surface side of the optical function layer,
the optical function layer comprising a polymer of a photoreactive monomer, and a matrix polymer,
the first thermoplastic resin layer comprising an ultraviolet ray absorber and having a transmittance at a wavelength of 400 nm of 20% or less.

2. The interlayer film for laminated glass according to claim 1, wherein the first thermoplastic resin layer has a transmittance at a wavelength of 410 nm of 60% or less.

3. The interlayer film for laminated glass according to claim 1 or 2, wherein the first thermoplastic resin layer has a transmittance at a wavelength of 420 nm of 70% or less.

4. The interlayer film for laminated glass according to any one of claims 1 to 3, wherein the ultraviolet ray absorber is at least one selected from the group consisting of a benzotriazole compound, an indole-based compound, and a porphyrin compound.

5. The interlayer film for laminated glass according to claim 4, wherein the ultraviolet ray absorber comprises a benzotriazole compound and at least one selected from the group consisting of an indole-based compound and a porphyrin compound.

6. The interlayer film for laminated glass according any one of claims 1 to 5, further comprising a second thermoplastic resin layer provided on another surface side of the optical function layer.

7. The interlayer film for laminated glass according to claim 6, wherein when a transmittance of the second thermoplastic resin layer at a wavelength of 400 nm is assumed to be T400(2), and a transmittance of the first thermoplastic resin layer at a wavelength of 400 nm is assumed to be T400(1), the interlayer film for laminated glass satisfies a relationship of T400(2)>T400(1).

8. The interlayer film for laminated glass according to claim 6 or 7, wherein when a transmittance of the second thermoplastic resin layer at a wavelength of 410 nm is assumed to be T410(2), and a transmittance of the first thermoplastic resin layer at a wavelength of 410 nm is assumed to be T410(1), the interlayer film for laminated glass satisfies a relationship of T410(2)>T410(1).

9. The interlayer film for laminated glass according to any one of claims 6 to 8, wherein when a transmittance of the second thermoplastic resin layer at a wavelength of 420 nm is assumed to be T420(2), and a transmittance of the first thermoplastic resin layer at a wavelength of 420 nm is assumed to be T420(1), the interlayer film for laminated glass satisfies a relationship of T420(2)>T420(1).

10. The interlayer film for laminated glass according to any one of claims 1 to 9, wherein the optical function layer comprises a photopolymerization initiator.

11. A laminated glass comprising:
the interlayer film for laminated glass according to any one of claims 1 to 10; and
a pair of glass plates, wherein
the interlayer film for laminated glass is disposed between the pair of glass plates.
